# EUROPEAN PATENT SPECIFICATION

(11) **EP 3 530 986 B1**
(45) Date of publication and mention of the grant of the patent: **19.04.2023**
(21) Application number: 18158994.6
(22) Date of filing: 27.02.2018
(51) Int. Cl.: F16H 48/11

(54) **A MOTOR VEHICLE DIFFERENTIAL WITH A LOW RANGE DEVICE**
KRAFTFAHRZEUGDIFFERENZIAL MIT NIEDERDRUCKVORRICHTUNG
DIFFÉRENTIEL DE VÉHICULE À MOTEUR COMPORTANT UN DISPOSITIF À FAIBLE PORTÉE

(43) Date of publication of application: 28.08.2019
(73) Proprietor: FCA Italy S.p.A., 10135 Torino (IT)
(72) Inventor: CONSANI, Marco, 10135 Torino (IT); PREGNOLATO, Gianluigi, 10135 Torino (IT)
(74) Representative: De Bonis, Paolo

(56) References cited:
- WO-A1-2013/174552
- DE-A1-102011 007 259
- DE-A1-102013 205 432

## Description

### Field of the invention

The present invention relates to differentials for motor vehicles. Background documents in this field include, i.a., WO 2013/174552 A1, DE 10 2013 205 432 A1, and DE 10 2011 007 259.

### Prior art and general technical problem

The solutions currently adopted in the design of a motor-vehicle transmission envisage - to a variable extent but, however, in a concordant way - providing a first gear ratio sufficiently short as to enable the vehicle to pull off easily even in conditions of heavy load (for example, on a steep slope and/or with the vehicle heavily loaded).

However, there is a limit for the transmission ratio of the first gear that cannot be exceeded for constructional reasons and/or for reasons linked to driveability of the vehicle. In fact, the adoption of an excessively short first gear ratio results in an excessively marked step in speed with respect to the second gear ratio as a result of the fact that the second gear ratio - and along with it, the subsequent ratios - cannot in any case be excessively short (i.e., with marked gear reductions). This has a negative impact on the driveability of the vehicle, since the driver, after passage from the first gear to the second gear, finds himself instantaneously with the engine in operating conditions (as regards load and r.p.m.) that are not optimal, or at least not comparable with the ones that correspond to the first gear when pulling off.

On the other hand, the ever-increasing need for containment of fuel consumption calls for the adoption of sufficiently long forward gear ratios, in such a way as to lower the engine speed given the same travelling and/or cruising speed.

This is clearly impracticable for the first gear ratio, because otherwise there would be modest levels of performance when pulling off. This means that in any case the first gear ratio limits the benefit that can be achieved as regards fuel consumption, since the compromise solution that derives from the current constraints results in a ratio that is in any case too short in the perspective of a reduction of consumption levels, and still too long for the most problematical starting manoeuvres, especially for vehicles for offroad use.

### Object of the invention

The object of the present invention is to solve the technical problems mentioned previously.

In particular, the object of the invention is to reconcile the requirements of starting in burdensome conditions with the requirements of reduction of consumption levels.

### Summary of the invention

The object of the present invention is achieved by a motor-vehicle differential having the features forming the subject of one or more of the appended claims, which form an integral part of the technical disclosure provided herein in relation to the invention.

### Brief description of the drawings

The invention will now be described with reference to the annexed drawings, which are provided purely by way of non-limiting example and in which:
- Figure 1 is a schematic representation of a motor-vehicle differential according to the invention; and
- Figure 2 is a longitudinal sectional view of a preferred embodiment of the differential according to the invention.

### Detailed description

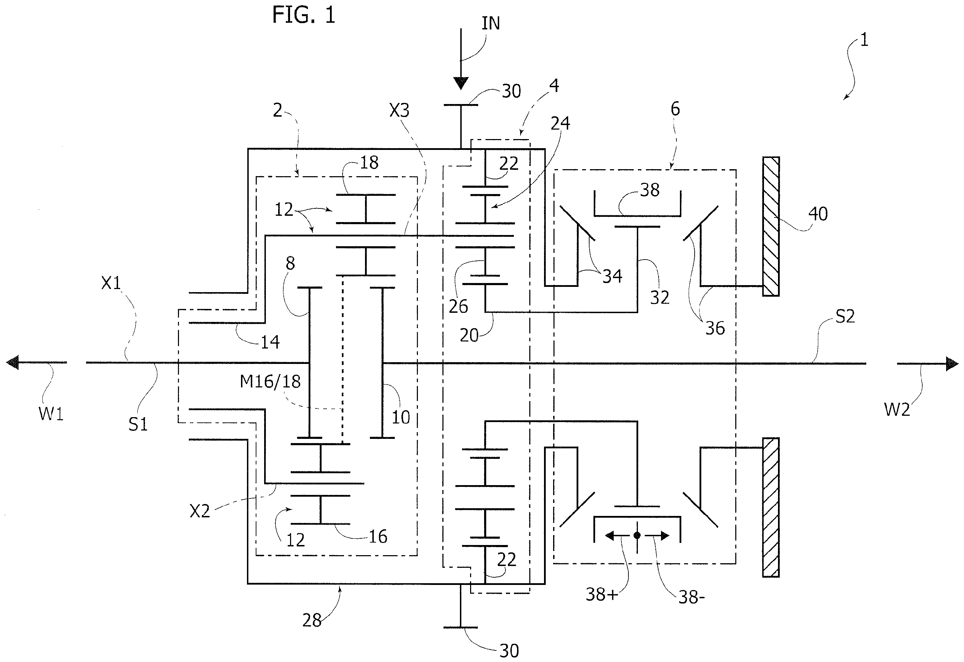

The reference number 1 in Figure 1 designates as a whole a motor-vehicle differential according to the invention. The differential 1 comprises a first epicyclic unit 2, a second epicyclic unit 4, and an engagement device 6 operatively connected to the second epicyclic unit 4.

The first epicyclic unit 2 includes a first sun gear 8, a second sun gear 10, and a first planetary unit 12, which meshes with the sun gears 8 and 10. The first sun gear 8 and the second sun gear 10 are coaxial to one another and are rotatable about an axis X1 that constitutes the axis of the differential 1. The first sun gear 8 and the second sun gear 10 moreover have the same diameter and both have external toothing.

The axis X1 corresponds to the axis shared by the fist sun gears 8 and the second sun gear 10 with a first output shaft S1 and a second output shaft S2, which can be connected to the first sun gear 8 and to the second sun gear 10, respectively, where the first output shaft S1 and the second output shaft S2 can in turn be connected to the wheels of a motor vehicle (W1, W2) by means of constant-velocity joints and semiaxles.

The first planetary unit 12 includes a planet carrier 14, which is mounted rotatable about the axis X1 and is consequently coaxial to both of the first and second sun gears 8, 10 and carries a first planetary gear 16 that meshes with the first sun gear 8 and a second planetary gear 18 that meshes with the second sun gear 10. The first and second planetary gears 16, 18 in turn mesh with one another in an axial region not occupied by the toothings of the first and second sun gears 8, 10 (viz. meshing plane M16/18).

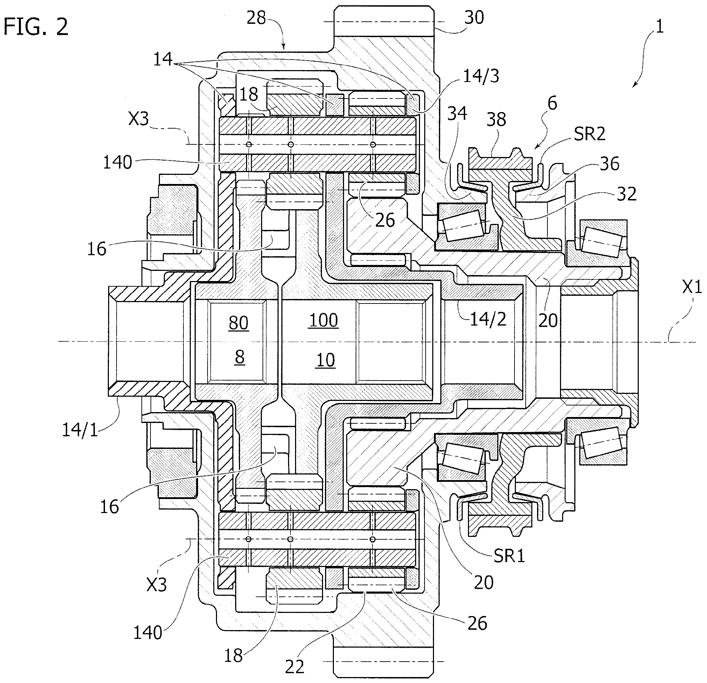

It should moreover noted that, even though for representation requirements the first planetary unit 12 is here represented as including a single first planetary gear 16 and a single second planetary gear 18, in preferred embodiments, such as the one illustrated in the subsequent Figure 2, the first planetary gears 16 and the second planetary gears 18 form part of respective sets of three or more - typically four - gears, spaced by 120° (three gears) or 90° (four gears) with respect to one another and arranged around the first and second sun gears 8, 10.

Moreover, in still further embodiments, the first and second planetary gears 16, 18 may be arranged coaxial to one another and be provided integrally on a sleeve (of which they occupy end positions), which is mounted rotatable on the planet carrier 12.

In the embodiment illustrated in Figure 1, the first and second planetary gears 16, 18 are mounted rotatable about a respective axis of rotation X2 (gear 16) and X3 (gear 18) which are at the same radial distance from the axis X1.

The second epicyclic unit 4 comprises a third sun gear 20, which is coaxial to the axis X1 and is coaxial to the first and second sun gears 8, 10, a ring gear 22, which is also coaxial to the axis X1 and is coaxial to the first, second and third sun gears 8, 10, 20, and a second planetary unit 24, which includes one or more third planetary gears 26 (for example, three spaced by 120°, or four spaced by 90°).

The second planetary unit 24 meshes with the third sun gear 20 and the ring gear 22 by means of the third planetary gear/gears 26, which in this case each mesh with both the third sun gear 20 and the ring gear 22. The third sun gear 20 (which is cylindrical) is of the type with external toothing exactly like the first and second sun gears 8, 10, whereas the ring gear 22 is a cylindrical gear of the type with internal toothing and meshes with the third planetary gears 26 along a path that is peripheral with respect to the axis X1.

With reference once again to Figure 1, the ring gear 22 is preferably provided as forming part of a casing 28, inside which the toothing that defines the ring gear 22 is provided and inside which the first and second epicyclic units 2, 4 are also housed. Moreover, on the outer surface of the casing 28 a further toothing is provided that defines a further gear wheel 30, which defines a power takeoff of the differential 1.

The further gear wheel 30 can, in particular, be coupled to an input shaft of the differential 1, typically corresponding to the output shaft of a gearbox (generally a secondary shaft) or else, in the case of use of the differential 1 as rear differential on a rear-drive vehicle, corresponding to the transmission shaft coming from the gearbox.

The engagement device 6 comprises a first element 32, a second element 34, a third element 36, and a moving element 38, all four of which are share the axis X1. The first element 32 is connected in rotation to the third sun gear 20, the second element 34 is connected in rotation to the ring gear 22 and to the casing 28, whereas the third element 36 is fixed both in rotation and in regard to the axial movement along the axis X1. In particular, the third element 36 is connected to a fixed component 40, for example, a casing of the differential or else a casing of the gearbox of the motor vehicle.

It is the fixed component 40 that provides the fixed position reference, both axially and in rotation.

With reference to Figure 2, a practical example of embodiment of the diagram of Figure 1 will now be illustrated. For simplicity and economy of description, all the components structurally and functionally identical to the ones already described are designated by the same reference numbers.

Only some aspects of how certain components are obtained that are relevant for actual implementation of the diagram of Figure 1 will hence be described.

As visible in the cross-sectional view of Figure 2, in the preferred embodiment, the planet carrier 14 is provided in three pieces, namely, a first plate 14/1, a second plate 14/2, and a ring 14/3.

The two plates 14/1 and 14/2 support three hollow shafts 140, mounted idle on which are the second and third planetary gears 18 and 26, whereas further three shafts are mounted in an identical way for supporting the first planetary gears 16 in a freely rotatable (idle) way. The ring 14/3 axially closes the ensemble and is fitted on the shafts 140.

The first and second sun gears 8, 10 are provided as hollow sleeve members within which grooved profiles 80, 100 are provided for torsional coupling to the output shafts S1, S2.

In general, all the components are provided with a sleeve/bell structure in such a way as to enable the nested assembly visible in Figure 2. On the front of the engagement device 6, in Figure 2 it may be noted how the second element 34 of the device is provided integral with the ring gear 22, the casing 28, and the further gear wheel 30 (where this is not fitted on the casing 28 differently), whereas the first element of the engagement device 6 is force fitted on the hub of the third sun gear 20.

In the preferred embodiment illustrated in Figure 2, the engagement device 6 is a synchronizer with conical elements. The first element 32 of the engagement device is a hub of the synchronizer that includes an external peripheral toothing. The second element 34 of the engagement device is a first synchronizer cone and is, in the light of what has been described, connected in rotation to the ring gear 22.

The third element 36 of the engagement device 6 is a second synchronizer cone (fixed in rotation) provided as collar constrained to a component fixed in rotation and in axial translation (for example, the casing of the differential or else the casing of the transmission).

A first (conical) synchronizer ring SR1 is moreover set between the hub 32 and the first synchronizer cone 34, and a second synchronizer ring SR2 is set between the hub 32 and the second synchronizer cone 36.

The moving element 38 is a sleeve connected in rotation to the hub 32 by means of an internal grooved profile that engages an external grooved profile of the hub 32, and is axially mobile with respect to the hub 32 in the directions 38+ and 38- visible in Figure 1. Moreover arranged between the hub 32 and the first and second synchronizer cones 34, 36 are a first synchronizer ring SR1 (between the cone 34 and the hub 32) and a second synchronizer ring SR2 (between the hub 32 and the cone 36).

In an alternative embodiment, the engagement device 6 is provided as an engagement device with contrate teeth (of the so-called dog-clutch type) where the second and third elements 34, 36 are provided as collars with a ring of contrate teeth (arranged aligned in directions parallel to the axis X1), whereas the first element 32 also functions as moving element. In particular, in a way in itself known, the first element 32 is provided as a sleeve member, which is connected in rotation to the third sun gear 20 (but is axially movable along the body thereof) and bears on the periphery a profile that can be coupled with an actuator element (typically, a groove that can be coupled with an actuation fork), whereas on opposite faces in an axial direction two front teeth (dog teeth) are provided configured for engaging, respectively, the front teeth (dog teeth) of the second and third elements 34 and 36 upon movement of the first element 32 towards the corresponding elements.

In a way similar to the case of the engagement device 6 provided as synchronizer, the third element 36 is bound to a component fixed in rotation and in axial translation (for example, the casing of the differential or else the casing of the transmission).

Operation of the differential 1 is described hereinafter.

With reference to Figure 1 (or equivalently to Figure 2), the differential 1 can operate according to two modes defined by two distinct operating conditions of the engagement device 6. In a first operating condition, the engagement device 6 connects in rotation the third sun gear 20 and the ring gear 22, i.e., the components connected in rotation to the first and second elements 32, 34 of the engagement device 6. This first operating condition is achieved by means of translation of the sleeve 38 (or of the hub 32 in the case of a dog-clutch engagement device) in the direction 38+.

Hence, in this operating condition, and as a result of the aforesaid translation of the sleeve 38/hub 32 (according to the type of engagement device) inhibition of the very relative movement (or at least an inhibition of the possibility of relative movement) between the one or more third planetary gears 26 and the gears 20 (third sun gear), 22 (ring gear) is achieved.

In other words, locking of the second epicyclic unit 4 is obtained, which in this way behaves as a one piece rotor connected in rotation to the planet carrier 14. In this condition, as will be appreciated, the differential 1 behaves like an ordinary differential comprising just the epicyclic unit 2, since the further gear wheel 30 and the second epicyclic unit 4, which is locked, are rigidly connected together in rotation, thus providing a condition of transmission of motion from the further gear wheel 30 - by means of an output shaft of a gearbox - to the planet carrier 14 that is altogether identical to the transmission that would take place in the case where the planet carrier 14 is directly constrained to (or integral with) the further gear wheel 30 itself as occurs in conventional differentials.

Specifically, the differential 1 receives the motion (reference IN) through the gear wheel 30, and this motion is transmitted to the planet carrier 14 and hence to the first and second sun gears 8, 10 by means of the first and second planetary gears 16, 18. In the case where there exists a difference of angular velocity between the output shafts S1 and S2, the differential 1 will enable as usual a relative movement between the planet carrier 14 and the first and second sun gears 8, 10 (the so-called slip) so as to enable differentiation of the velocities of rotation of the two shafts S1, S2.

The first operating condition of the engagement device 6 hence corresponds to a condition of normal operation or, from the standpoint of transmission of motion to the planet carrier 14, a condition of transmission with a ratio of 1:1.

In a second operating condition, the engagement device 6 blocks rotation of the third sun gear 20, connecting it to the fixed component 40 via coupling of the hub 32 to the third element 36. This second operating condition is achieved by means of translation of the sleeve 38 (or of the hub 32 in the case of a dog-clutch engagement device) in the direction 38-.

In this way, the second epicyclic unit 4 is activated, likewise allowing the possibility of relative movement between the second planetary unit 24 (third planetary gears 26) and the gears 20 (third sun gear), 22 (ring gear).

This means that the planet carrier 14 and the further gear wheel 30 are not rigidly connected in rotation, but the connection takes place through a reduction stage upstream of the first epicyclic unit 2 provided precisely by the second epicyclic unit 4.

In particular, the motion that enters through the further gear wheel 30 is transferred to the ring gear 22, and from this, as a result of blocking of the third sun gear 20, is transferred, by means of the third planetary gears 26, to the planet carrier 14. By the latter the motion is transferred to the first and second sun gears 8, 10 according to the modalities already described and in themselves known.

The reduction ratio provided by the second epicyclic unit 4, defined as ratio between the velocity of rotation of the further gear wheel 30 (and of the ring gear 22) and the velocity of rotation of the planet carrier 14, is hence higher than the unit.

Basically, the engagement device 6 operates as a low-range device upstream of the differential 1. By selecting the second operating condition a manoeuvre is performed equivalent to selection of a low gear range (or more simply, low range).

Both of the operating conditions of the engagement device 6 - and consequently of the differential 1 - can be selected by means of a manual control, which is located in the passenger compartment of the vehicle and can be operated by the driver, or else automatically by means of an electronic control unit.

Selection of the second operating condition is, however, subject to certain conditions listed hereinafter. Preferably, the control strategy is configured in such a way that the non-observance of at least one of the conditions result in preclusion of the selection itself or else automatic passage to the first operating condition of the engagement device 6.

The above conditions include:
i) selection of the first forward gear or of the reverse gear;
ii) vehicle speed lower than a threshold speed.

In particular, the second condition is decisive: activation of the second epicyclic unit 4 reduces further the transmission ratio between the engine and the wheels (understood as the ratio between the rotational velocity of the wheels and the engine r.p.m.; in a dual way, it can be said that activation of the second epicyclic unit 4 will increase the reduction ratio - which is the inverse of the aforementioned ratio), with consequent risk of serious damage to the engine and to the transmission in the case where the vehicle speed were to exceed the threshold mentioned above. Preferably, the threshold can be set between 25 km/h and 45 km/h according to the features of the engine and transmission. A preferred threshold value corresponds to 35 km/h (approximately 22 mph) .

Accessory conditions may moreover be envisaged, such as the fact that the vehicle is in pulling-off conditions, possibly combined with a slope threshold applying to the terrain on which the vehicle is travelling.

Subject to the above conditions, in the case where the driver and/or the control unit do/does not select the second operating condition, the engagement device 6 is constantly kept in the first operating condition, in such a way as to control the differential 1 as if it were without the second epicyclic unit 4. The first operating condition (transmission with a ratio of 1:1 between first and second epicyclic units) is maintained as long as the vehicle is cruising - whatever the forward gear selected - to enable transmission of motion from the engine to the wheels of the vehicle. In general, in order for transmission of motion to be obtained, either one or the other operating condition of the device 6 must be selected. Otherwise (engagement device 6 in neutral position), input of the motion from the further gear wheel 30 causes only an idle rotation of the third sun gear 20 with a transmission of torque to the planet carrier 14 that is negligible and ultimately is not sufficient to drive the first epicyclic unit 2 in motion and the wheels of the vehicle along with it.

Thanks to the differential 1, it becomes possible to manage setting off in extremely burdensome conditions both in the case of forward setting off and in the case of setting off in reverse: this is possible with selection of the second operating condition of the engagement device 6. Once there is no longer the need to set off, it is possible to switch the differential 1 into a condition of normal operation, excluding the second epicyclic unit 4, and hence enabling the engine of the vehicle to achieve targets of reduction of consumption levels that cannot be achieved by means of known differentials.

In fact, thanks to the de-activatable reduction stage provided by the second epicyclic unit 4, it is possible to choose a longer ratio for all the forward gears of the gearbox of the vehicle, including the first gear and the reverse gear. In the event of burdensome starting conditions, it is sufficient to activate the second epicyclic unit 4, excluding it when the starting manoeuvre is completed. Basically, the second epicyclic unit 4 decouples design of the gearbox from the requirements linked to setting off, thus widening the margin of freedom that can be exploited for reducing consumption levels.

In addition to the above, by shifting the set off design constraints from the gearbox to the differential, it becomes possible to provide the gearbox with a smoother progression of the gear ratios, without sharp speed steps between the first gear and the subsequent gears (in particular, the second gear).

Of course, the details of construction and the embodiments may vary widely with respect to what has been described and illustrated, without thereby departing from the scope of the present invention, as defined by the annexed claims.

For example, it is possible to envisage an application of the differential 1 as central differential on a four-wheel-drive vehicle. In this case, the further gear wheel 30 can be connected to the output shaft of the gearbox (for example, by means of a chain transmission with multiple links or else via direct meshing between the further gear wheel 30 and a gear wheel on the output shaft of the gearbox), and the third element 36 of the engagement device 6 can be connected to the casing of the gearbox itself. The first and second sun gears 8, 10 can transfer the motion to the front differential and to the rear differential, respectively. The only addition that may be envisaged with respect to the differential 1 so far described regards provision of a slip limiting device between the first and second sun gears 8 and 10, for example a viscous coupling or else first and second planetary gears 16, 18 with gear mesh that render the first epicyclic unit 2 sensitive to the torque required by the first and second sun gears 8, 10.

It should, however, be borne in mind that in some applications it is possible to use the differential 1 without the slip limiting device (so-called open differential), possibly assigning the function concerned to other systems, for example, a traction control system.

It is moreover possible to use the differential 1 as front differential in a four-wheel-drive vehicle without central differential, i.e., in which the front differential comprises a power takeoff that transfers the motion to the rear differential (with interposition of a corresponding engagement device).

In this case, the power takeoff can be provided on the planet carrier 14 (with specific reference to the cross-sectional view of Figure 2, it is possible to prolong the terminal sleeve of the element 14/2 on the right of the drawing), in such a way that the effects of activation and de-activation of the epicyclic unit 4 are transferred both to the front axle and to the rear axle (i.e., to an axle different from the one associated to the differential 1).

## Claims

1. A motor-vehicle differential (1) comprising a first epicyclic unit (2), the first epicyclic unit (2) including:
- a first sun gear (8), which is rotatable about a first axis of rotation (X1) and is configured for a connection to a first output shaft (S1);
- a second sun gear (10) coaxial to the first sun gear (8), which is rotatable about the first axis of rotation (X1) and is configured for a connection to a second output shaft (S2); and
- a first planetary unit (12), which meshes with said first sun gear (8) and said second sun gear (10), said first planetary unit (12) being carried by a planet carrier (14), which is rotatable about the first axis of rotation (X1),
wherein the differential (1) furthermore includes a second epicyclic unit (4),
the second epicyclic unit (4) including:
- a third sun gear (20) coaxial to said first sun gear (8) and said second sun gear (10);
- a ring gear (22) coaxial to said first sun gear (8) and said second sun gear (10), wherein said ring gear (22) is provided as a casing (28) which houses inside it the first epicyclic unit (2) and the second epicyclic unit (4), wherein moreover on an outer surface of the casing (28) a toothing is provided that defines a further gear wheel (30) configured to be coupled to an input shaft of the differential (1); and
- a second planetary unit (24), meshing with said third sun gear (20) and said ring gear (22), said second planetary unit (24) being carried by the planet carrier (14) of the first planetary unit (12),
the differential (1) being **characterized in that** it further comprises an engagement device (6) operatively connected to said second epicyclic unit (4), the engagement device (6) including a first operating condition in which said third sun gear (20) is connected in rotation to said ring gear (22), and a second operating condition in which rotation of said third sun gear (20) is blocked, the engagement device (6) being configured to connect the third sun gear (20) to a fixed component (40) in the second operating condition.

2. The differential (1) according to Claim 1, wherein said engagement device (6) comprises a first element (32), a second element (34), and a third element (36), wherein:
- said third sun gear (20) is connected in rotation to said first element (32) of the engagement device (6);
- said ring gear (22) is connected in rotation to said second element (34) of the engagement device (6) and is moreover connected in rotation to a gear wheel (30) that can be coupled to an input shaft (IN); and moreover
- the third element (36) of the engagement device is connected to a component (40) fixed in rotation.

3. The differential (1) according to Claim 2, wherein the engagement device (6) comprises a mobile element (38) that is movable between a first operating position (38+), in which a coupling is provided of said first element (32) of the engagement device (6) to said second element (34) of the engagement device (6), and a second operating position (38-), in which a coupling is provided of said first element (32) of the engagement device (6) to said third element (36) of the engagement device (60).

4. The differential according to any one of the preceding claims, wherein:
- in the first operating condition of the engagement device (6), the third sun gear (20) and the ring gear (22) are connected in rotation to one another and the relative movement between said second planetary unit (24, 26) and said third sun gear (20) and ring gear (22) is disabled; and
- in the second operating condition of the engagement device (6), locking of the rotation of the third sun gear (20) enables relative movement between said second planetary unit (24, 26) and said third sun gear (20) and ring gear (22).

5. The differential (1) according to Claim 1, wherein said ring gear (22) is provided with internal toothing, and said third sun gear (20) is a gear with external toothing.

6. The differential (1) according to any one of the preceding claims, wherein said first sun gear (8) and said second sun gear (10) both have an external toothing and the same diameter.

7. The differential (1) according to Claim 6, wherein said first planetary unit (12) includes one or more first planetary gears (16) meshing with said first sun gear (8) and one or more second planetary gears (18) meshing with said second sun gear (10) and with corresponding gears of said one or more first planetary gears (16),
said one or more first planetary gears (16) and said one or more second planetary gears being rotatable about respective second axes of rotation (X2) and third axes of rotation (X3) arranged at the same radial distance from said first axis of rotation (X1).

8. The differential (1) according to any one of Claims 1 and 5 to 7, wherein said second planetary unit (24) includes one or more third planetary gears (26) meshing with the third sun gear (20) and with the ring gear (22).

9. The differential (1) according to Claim 8, wherein said one or more third planetary gears are carried by said planet carrier (14), alternatively coaxially to corresponding first planetary gears or coaxially to corresponding second planetary gears (18).

10. The differential (1) according to any one of Claims 3 to 9, wherein said engagement device (6) is a synchronizer with conical elements, wherein:
- the first element (32) of the engagement device (6) is a hub of said synchronizer;
- the second element (34) of the engagement device (6) is a first synchronizer cone connected to said ring gear (22);
- the third element (36) of the engagement device (6) is a second synchronizer cone fixed in rotation; and
- the moving element (38) is a sleeve connected in rotation to said hub (32) and axially movable with respect thereto.

11. The differential (1) according to Claim 10, wherein a first synchronizer ring (SR1) is arranged between said hub (32) and said first synchronizer cone (34), and wherein a second synchronizer ring (SR2) is arranged between said hub (32) and said second synchronizer cone (36).

12. The differential according to any one of Claims 3 to 9, wherein said engagement device (6) is an engagement device with front teeth wherein:
- the first element (34) and the third element (36) of the engagement device (6) are provided as collars with a ring of front teeth; and
- the first element (32) of the engagement device is connected in rotation to said third sun gear (20) and is axially mobile with respect thereto, and further includes front teeth configured for engaging, respectively, the front teeth of the second element (34) and of the third element (36), said first element (32) moreover constituting the moving element of the engagement device (6).

13. The differential (1) according to any one of the preceding claims, including a power takeoff connected in rotation to said planet carrier, said power takeoff being configured for transmission of motion to an axle different from the one associated to the differential.

14. The differential (1) according to any one of the preceding claims, comprising a device for limiting slip between said first sun gear (8) and said second sun gear (10).

## Patentansprüche

1. Kraftfahrzeugdifferenzial (1), umfassend eine erste epizyklische Einheit (2), wobei die erste epizyklische Einheit (2) umfasst:
- ein erstes Sonnenrad (8), das um eine erste Drehachse (X1) drehbar und für eine Verbindung mit einer ersten Ausgangswelle (S1) eingerichtet ist;
- ein zum ersten Sonnenrad (8) koaxiales zweites Sonnenrad (10), das um die erste Drehachse (X1) drehbar und für eine Verbindung mit einer zweiten Ausgangswelle (S2) eingerichtet ist; und
- eine erste Planeteneinheit (12), die mit dem ersten Sonnenrad (8) und dem zweiten Sonnenrad (10) kämmt, wobei die erste Planeteneinheit (12) von einem Planetenträger (14) getragen wird, der um die erste Drehachse (X1) drehbar ist,
wobei das Differenzial (1) ferner eine zweite epizyklische Einheit (4) umfasst,
wobei die zweite epizyklische Einheit (4) umfasst:
- ein zum ersten Sonnenrad (8) und zum zweiten Sonnenrad (10) koaxiales drittes Sonnenrad (20);
- ein zum ersten Sonnenrad (8) und zum zweiten Sonnenrad (10) koaxiales Hohlrad (22), wobei das Hohlrad (22) als ein Gehäuse (28) vorgesehen ist, das in sich die erste epizyklische Einheit (2) und die zweite epizyklische Einheit (4) aufnimmt, wobei ferner auf einer Außenfläche des Gehäuses (28) eine Verzahnung vorgesehen ist, die ein weiteres Getrieberad (30) definiert, das dazu eingerichtet ist, mit einer Eingangswelle des Differenzials (1) gekuppelt zu werden; und
- eine zweite Planeteneinheit (24), die mit dem dritten Sonnenrad (20) und dem Hohlrad (22) kämmt, wobei die zweite Planeteneinheit (24) von dem Planetenträger (14) der ersten Planeteneinheit (12) getragen wird,
wobei das Differenzial (1) **dadurch gekennzeichnet ist, dass** es ferner eine Eingriffsvorrichtung (6) umfasst, die mit der zweiten epizyklischen Einheit (4) wirkverbunden ist, wobei die Eingriffsvorrichtung (6) einen ersten Betriebszustand, in dem das dritte Sonnenrad (20) mit dem Hohlrad (22) drehend verbunden ist, und einen zweiten Betriebszustand umfasst, in dem die Drehung des dritten Sonnenrads (20) blockiert ist, wobei die Eingriffsvorrichtung (6) dazu eingerichtet ist, das dritte Sonnenrad (20) mit einem feststehenden Bauteil (40) in dem zweiten Betriebszustand zu verbinden.

2. Differenzial (1) nach Anspruch 1, wobei die Eingriffsvorrichtung (6) ein erstes Element (32), ein zweites Element (34) und ein drittes Element (36) umfasst, wobei:
- das dritte Sonnenrad (20) drehend mit dem ersten Element (32) der Eingriffsvorrichtung (6) verbunden ist;
- das Hohlrad (22) drehend mit dem zweiten Element (34) der Eingriffsvorrichtung (6) verbunden ist und ferner drehend mit einem Getrieberad (30) verbunden ist, das mit einer Eingangswelle (IN) gekuppelt werden kann; und ferner
- das dritte Element (36) der Eingriffsvorrichtung drehfest mit einem Bauteil (40) verbunden ist.

3. Differenzial (1) nach Anspruch 2, wobei die Eingriffsvorrichtung (6) ein bewegliches Element (38) umfasst, das zwischen einer ersten Arbeitsstellung (38+), in der eine Kupplung des ersten Elements (32) der Eingriffsvorrichtung (6) mit dem zweiten Element (34) der Eingriffsvorrichtung (6) vorgesehen ist, und einer zweiten Arbeitsstellung (38-) beweglich ist, in der eine Kupplung des ersten Elements (32) der Eingriffsvorrichtung (6) mit dem dritten Element (36) der Eingriffsvorrichtung (60) vorgesehen ist.

4. Differenzial nach einem der vorhergehenden Ansprüche, wobei:
- im ersten Betriebszustand der Eingriffsvorrichtung (6) das dritte Sonnenrad (20) und das Hohlrad (22) drehend miteinander verbunden sind und die Relativbewegung zwischen der zweiten Planeteneinheit (24, 26) und dem dritten Sonnenrad (20) und dem Hohlrad (22) verhindert ist; und
- im zweiten Betriebszustand der Eingriffsvorrichtung (6) die Sperre der Drehung des dritten Sonnenrads (20) die Relativbewegung zwischen der zweiten Planeteneinheit (24, 26) und dem dritten Sonnenrad (20) und dem Hohlrad (22) ermöglicht.

5. Differenzial (1) nach Anspruch 1, wobei das Hohlrad (22) mit einer Innenverzahnung versehen ist und das dritte Sonnenrad (20) ein Zahnrad mit einer Außenverzahnung ist.

6. Differenzial (1) nach einem der vorhergehenden Ansprüche, wobei das erste Sonnenrad (8) und das zweite Sonnenrad (10) beide eine Außenverzahnung und den gleichen Durchmesser haben.

7. Differenzial (1) nach Anspruch 6, wobei die erste Planeteneinheit (12) ein oder mehr erste Planetenräder (16), die mit dem ersten Sonnenrad (8) kämmen, und ein oder mehr zweite Planetenräder (18) umfasst, die mit dem zweiten Sonnenrad (10) und mit entsprechenden Zahnrädern des einen oder der mehreren ersten Planetenräder (16) kämmen,
wobei das eine oder die mehreren ersten Planetenräder (16) und das eine oder die mehreren zweiten Planetenräder um jeweilige zweite Drehachsen (X2) und dritte Drehachsen (X3) drehbar sind, die im gleichen radialen Abstand von der ersten Drehachse (X1) angeordnet sind.

8. Differenzial (1) nach einem der Ansprüche 1 und 5 bis 7, wobei die zweite Planeteneinheit (24) ein oder mehr dritte Planetenräder (26) umfasst, die mit dem dritten Sonnenrad (20) und mit dem Hohlrad (22) kämmen.

9. Differenzial (1) nach Anspruch 8, wobei das eine oder die mehreren dritten Planetenräder von dem Planetenträger (14) alternativ koaxial zu entsprechenden ersten Planetenrädern oder koaxial zu entsprechenden zweiten Planetenrädern (18) getragen werden.

10. Differenzial (1) nach einem der Ansprüche 3 bis 9, wobei die Eingriffsvorrichtung (6) eine Synchronisiervorrichtung mit konischen Elementen ist, wobei:
- das erste Element (32) der Eingriffsvorrichtung (6) eine Nabe der Synchronisiervorrichtung ist;
- das zweite Element (34) der Eingriffsvorrichtung (6) ein erster Synchronkegel ist, der mit dem Hohlrad (22) verbunden ist;
- das dritte Element (36) der Eingriffsvorrichtung (6) ein drehfester zweiter Synchronkegel ist; und
- das bewegliche Element (38) eine Buchse ist, die drehend mit der Nabe (32) verbunden und gegenüber dieser axial beweglich ist.

11. Differenzial (1) nach Anspruch 10, wobei ein erster Synchronring (SR1) zwischen der Nabe (32) und dem ersten Synchronkegel (34) angeordnet ist und wobei ein zweiter Synchronring (SR2) zwischen der Nabe (32) und dem zweiten Synchronkegel (36) angeordnet ist.

12. Differenzial nach einem der Ansprüche 3 bis 9, wobei die Eingriffsvorrichtung (6) eine Eingriffsvorrichtung mit Stirnzähnen ist, wobei:
- das erste Element (34) und das dritte Element (36) der Eingriffsvorrichtung (6) als Bünde mit einem Ring von Stirnzähnen vorgesehen sind; und
- das erste Element (32) der Eingriffsvorrichtung drehend mit dem dritten Sonnenrad (20) verbunden und gegenüber diesem axial beweglich ist und ferner Stirnzähne umfasst, die gestaltet sind, um mit den Stirnzähnen des zweiten Elements (34) beziehungsweise des dritten Elements (36) in Eingriff zu kommen, wobei das erste Element (32) ferner das bewegliche Element der Eingriffsvorrichtung (6) darstellt.

13. Differenzial (1) nach einem der vorhergehenden Ansprüche, umfassend einen Nebenabtrieb, der drehend mit dem Planetenträger verbunden ist, wobei der Nebenabtrieb für die Bewegungsübertragung auf eine Achse eingerichtet ist, die von derjenigen verschieden ist, die dem Differenzial zugeordnet ist.

14. Differenzial (1) nach einem der vorhergehenden Ansprüche, umfassend eine Vorrichtung zum Begrenzen des Schlupfes zwischen dem ersten Sonnenrad (8) und dem zweiten Sonnenrad (10).

## Revendications

1. Différentiel de véhicule automobile (1) comprenant une première unité épicycloïdale (2), la première unité épicycloïdale (2) comprenant :
- un premier planétaire (8), qui peut tourner autour d'un premier axe de rotation (X1) et est configuré pour se relier à un premier arbre de sortie (S1) ;
- un deuxième planétaire (10) coaxial au premier planétaire (8), qui peut tourner autour du premier axe de rotation (X1) et est configuré pour se relier à un deuxième arbre de sortie (S2) ; et
- un premier train planétaire (12), qui s'engrène avec ledit premier planétaire (8) et ledit deuxième planétaire (10), ledit premier train planétaire (12) étant porté par un porte-satellites (14), qui peut tourner autour du premier axe de rotation (X1),
dans lequel le différentiel (1) comprend en outre une deuxième unité épicycloïdale (4),
la deuxième unité épicycloïdale (4) comprenant :
- un troisième planétaire (20) coaxial audit premier planétaire (8) et audit deuxième planétaire (10) ;
- une couronne (22) coaxiale audit premier planétaire (8) et audit deuxième planétaire (10), dans lequel ladite couronne (22) est prévue comme un carter (28) qui loge à l'intérieur la première unité épicycloïdale (2) et la deuxième unité épicycloïdale (4), dans lequel de plus sur une surface extérieure du carter (28) est prévue une denture qui définit une autre roue dentée (30) configurée pour être couplée à un arbre d'entrée du différentiel (1) ; et
- un deuxième train planétaire (24), s'engrenant avec ledit troisième planétaire (20) et ladite couronne (22), ledit deuxième train planétaire (24) étant porté par le porte-satellites (14) du premier train planétaire (12),
le différentiel (1) étant **caractérisé en ce qu'**il comprend en outre un dispositif d'engagement (6) relié de manière fonctionnelle à ladite deuxième unité épicycloïdale (4), le dispositif d'engagement (6) comprenant une première condition de fonctionnement dans laquelle ledit troisième planétaire (20) est relié en rotation à ladite couronne (22), et une deuxième condition de fonctionnement dans laquelle la rotation dudit troisième planétaire (20) est bloquée, le dispositif d'engagement (6) étant configuré pour relier le troisième planétaire (20) à un composant fixe (40) dans la deuxième condition de fonctionnement.

2. Différentiel (1) selon la revendication 1, dans lequel ledit dispositif d'engagement (6) comprend un premier élément (32), un deuxième élément (34) et un troisième élément (36), dans lequel :
- ledit troisième planétaire (20) est relié en rotation audit premier élément (32) du dispositif d'engagement (6) ;
- ladite couronne (22) est reliée en rotation audit deuxième élément (34) du dispositif d'engagement (6) et est de plus reliée en rotation à une roue dentée (30) qui peut être couplée à un arbre d'entrée (IN) ; et de plus
- le troisième élément (36) du dispositif d'engagement est relié à un composant (40) fixe en rotation.

3. Différentiel (1) selon la revendication 2, dans lequel le dispositif d'engagement (6) comporte un élément mobile (38) qui peut se déplacer entre une première position de fonctionnement (38+), dans laquelle un couplage dudit premier élément (32) du dispositif d'engagement (6) audit deuxième élément (34) du dispositif d'engagement (6) est prévu, et une deuxième position de fonctionnement (38-), dans laquelle un couplage dudit premier élément (32) du dispositif d'engagement (6) audit troisième élément (36) du dispositif d'engagement (60) est prévu.

4. Différentiel selon l'une quelconque des revendications précédentes, dans lequel :
- dans la première condition de fonctionnement du dispositif d'engagement (6), le troisième planétaire (20) et la couronne (22) sont reliés en rotation l'un à l'autre et le mouvement relatif entre ledit deuxième train planétaire (24, 26) et ledit troisième planétaire (20) et ladite couronne (22) est désactivé ; et
- dans la deuxième condition de fonctionnement du dispositif d'engagement (6), le verrouillage de la rotation du troisième planétaire (20) permet un mouvement relatif entre ledit deuxième train planétaire (24, 26) et ledit troisième planétaire (20) et ladite couronne (22).

5. Différentiel (1) selon la revendication 1, dans lequel ladite couronne (22) est munie d'une denture interne, et ledit troisième planétaire (20) est un engrenage à denture externe.

6. Différentiel (1) selon l'une quelconque des revendications précédentes, dans lequel ledit premier planétaire (8) et ledit deuxième planétaire (10) ont tous deux une denture externe et le même diamètre.

7. Différentiel (1) selon la revendication 6, dans lequel ledit premier train planétaire (12) comprend un ou plusieurs premiers engrenages planétaires (16) s'engrenant avec ledit premier planétaire (8) et un ou plusieurs deuxièmes engrenages planétaires (18) s'engrenant avec ledit deuxième planétaire (10) et avec des engrenages correspondants desdits un ou plusieurs premiers engrenages planétaires (16),
lesdits un ou plusieurs premiers engrenages planétaires (16) et lesdits un ou plusieurs deuxièmes engrenages planétaires pouvant tourner autour de deuxièmes axes de rotation (X2) et troisièmes axes de rotation (X3) respectifs agencés à la même distance radiale dudit premier axe de rotation (X1).

8. Différentiel (1) selon l'une quelconque des revendications 1 et 5 à 7, dans lequel ledit deuxième train planétaire (24) comprend un ou plusieurs troisièmes engrenages planétaires (26) s'engrenant avec le troisième planétaire (20) et avec la couronne (22).

9. Différentiel (1) selon la revendication 8, dans lequel lesdits un ou plusieurs troisièmes engrenages planétaires sont portés par ledit porte-satellites (14), alternativement de manière coaxiale aux premiers engrenages planétaires correspondants ou de manière coaxiale aux deuxièmes engrenages planétaires correspondants (18).

10. Différentiel (1) selon l'une quelconque des revendications 3 à 9, dans lequel ledit dispositif d'engagement (6) est un synchroniseur à éléments coniques, dans lequel :
- le premier élément (32) du dispositif d'engagement (6) est un moyeu dudit synchroniseur ;
- le deuxième élément (34) du dispositif d'engagement (6) est un premier cône de synchroniseur relié à ladite couronne (22) ;
- le troisième élément (36) du dispositif d'engagement (6) est un deuxième cône de synchroniseur fixe en rotation ; et
- l'élément mobile (38) est un manchon relié en rotation audit moyeu (32) et pouvant se déplacer axialement par rapport à celui-ci.

11. Différentiel (1) selon la revendication 10, dans lequel une première bague de synchroniseur (SR1) est agencée entre ledit moyeu (32) et ledit premier cône de synchroniseur (34), et dans lequel une deuxième bague de synchroniseur (SR2) est agencée entre ledit moyeu (32) et ledit deuxième cône de synchroniseur (36).

12. Différentiel selon l'une quelconque des revendications 3 à 9, dans lequel ledit dispositif d'engagement (6) est un dispositif d'engagement à dents avant dans lequel :
- le premier élément (34) et le troisième élément (36) du dispositif d'engagement (6) sont prévus comme des colliers avec un anneau de dents avant ; et
- le premier élément (32) du dispositif d'engagement est relié en rotation audit troisième planétaire (20) et est mobile axialement par rapport à celui-ci, et comprend en outre des dents avant configurées pour engager, respectivement, les dents avant du deuxième élément (34) et du troisième élément (36), ledit premier élément (32) constituant de plus l'élément mobile du dispositif d'engagement (6).

13. Différentiel (1) selon l'une quelconque des revendications précédentes, comprenant une prise de force reliée en rotation audit porte-satellites, ladite prise de force étant configurée pour la transmission de mouvement à un essieu différent de celui associé au différentiel.

14. Différentiel (1) selon l'une quelconque des revendications précédentes, comprenant un dispositif de limitation de glissement entre ledit premier planétaire (8) et ledit deuxième planétaire (10).
